# EUROPEAN PATENT APPLICATION

(11) **EP 4 383 936 A1**
(43) Date of publication of application: **12.06.2024**
(21) Application number: 23214316.4
(22) Date of filing: 05.12.2023
(51) Int. Cl.: H04W 84/04, H04W 88/08, H04W 92/04

(54) **ARRANGEMENT FOR ACCESSING NETWORK AND ACCESS METHOD**

(30) Priority: 07.12.2022 FI 20226078
(71) Applicant: Haara, Juha, 90420 Oulu (FI)
(72) Inventor: Haara, Juha, 90420 Oulu (FI)
(74) Representative: Kolster Oy Ab

(57) **Abstract**

There is provided an arrangement for providing access to a cellular communication network, comprising: a base unit (312) configured be in connection with the cellular communication network and one or more connection modules (302, 314), the one or more connection modules being connectable in a wired or wireless manner to the base unit and form a part of the base unit (312) when connected. The arrangement may provide a terminal device an access to a cellular communication network either directly via a communication module or via the base unit to which one or more communication modules may be connected.

## Description

### TECHNICAL FIELD

The invention relates to communications.

### BACKGROUND

Modern communication networks allow the user to access the network in different ways. For example, while moving in the countryside the terminal devices of the users may connect to macro base stations of the network. In tightly built city centers base stations may cover a smaller area and are called micro base stations. Further, inside buildings, such as workplaces or homes, a so-called home or private base station may be utilized. A home base station may serve a house, a building, or an apartment.

One topic has gained increasing attention, namely health issues related to radiation from mobile devices. Developing apparatuses and methods to decrease radiation experienced by users of terminal devices is seen as important issue.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following some embodiments will be described with reference to the attached drawings, in which
Figure 1 illustrate an example of a wireless communication system;
Figure 2 illustrates a flow diagram according to an embodiment;
Figure 3 illustrates an example of a wireless communication system;
Figure 4 illustrates a flow diagram according to an embodiment; and
Figures 5 and 6 illustrate example of apparatuses according to an embodiment.

### DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wideband code division multiple access (WCDMA), or any combination thereof.

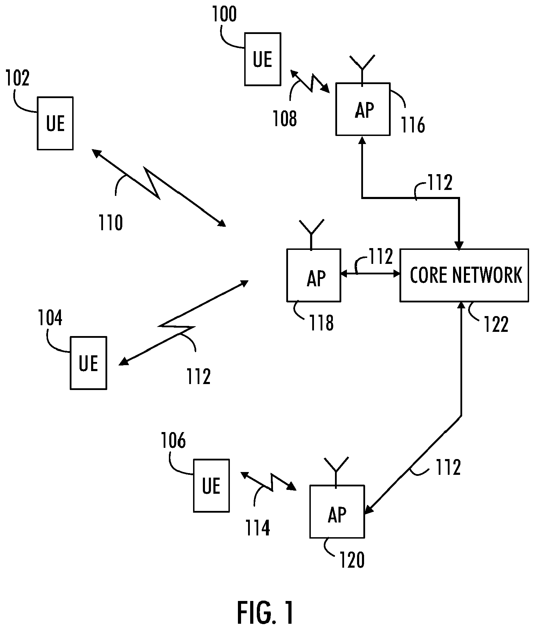

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows user devices 100, 102, 104, 106 configured to be in a wireless connection 108, 110, 112, 114 on one or more communication channels in cells served by access nodes 108, 110, 112 (such as (e/g)NodeB). The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one access points in which case the access points may also be configured to communicate with one another over links, wired or wireless, designed for the purpose. These links may be used for signalling and traffic data purposes. The access point is a computing device configured to control the radio resources of communication system it is coupled to. The access point may also be referred to as a base station, an (e/g)NodeB or any other type of interfacing device including a relay station capable of operating in a wireless environment. The access point comprises or is coupled to transceivers. From the transceivers of the access point, a connection is provided to an antenna unit that establishes bi-directional radio links to user devices. The antenna unit may comprise a plurality of antennas or antenna elements. In an embodiment, the duties of an access point are realized as units, namely a centralized unit (CU), a distributed unit (DU) and a radio unit (RU). The access point is further connected to core network 122. Depending on the system, the counterpart on the core network side can be a serving gateway (S-GW, routing and forwarding user data packets), packet data network gateway (P-GW), for providing connectivity of user devices to external packet data networks, or mobile management entity (MME), etc.

The user device 100,102,104,106 (also called UE, user equipment, user terminal, terminal device, etc.) illustrates one type of an apparatus to which resources on the air interface are allocated and assigned.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. The user device may also be called a subscriber unit, mobile station, remote terminal, access terminal, user terminal or user equipment (UE) just to mention but a few names or apparatuses.

Although the apparatuses have been depicted as single entities, different units, processors and/or memory units (not all shown in Figure 1) may be implemented.

5G also enables using multiple input - multiple output (MIMO) antennas, where the use of more than one antenna in communicating devices may enhance the communication quality.

The communication system is also able to communicate with other networks, such as a public switched telephone network or the Internet, or utilise services provided by them. The communication network may also be able to support the usage of cloud services, for example at least part of core network operations may be carried out as a cloud service.

In a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, pico- or femtocells. The access points of Figure 1 may provide any kind of these cells. A cellular radio system may be implemented as a multilayer network including several kinds of cells. Typically, in multilayer networks, one access node provides one kind of a cell or cells, and thus a plurality of access points are required to provide such a network structure.

For fulfilling the need for improving the deployment and performance of communication systems, the concept of "plug-and-play" access points or (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

In current wireless systems different wireless devices are not optimized for different use cases in regard of sustainable development (material efficiency) and health safety. Health issues related to radiation of mobile devices are taken into account in standards . All terminal devices in the market must fulfil given Specific Absorption Rate (SAR) regulations. Thus, the radiation power of terminal devices is limited by regulations. However, studies related to effects of radiation are still underway and there is a need to develop more safer ways of using the terminal devices.

Further, it is important that the use of communicating devices is versatile, i.e., their use is not limited to any given environment or use case, but they may be utilize din different kinds of environments.

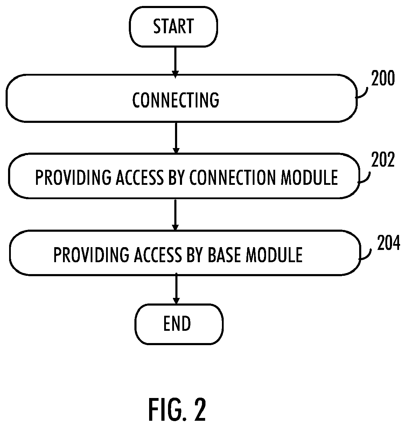

Figure 2 illustrates a flow chart according to an embodiment. The flowchart illustrates an example of the operation of an arrangement for providing access to a cellular communication network. In an embodiment, the arrangement comprises a base unit configured be in connection with the cellular communication network and one or more connection modules, the one or more connection modules being connectable to the base unit but also operable on their own.

In step 200, a terminal device connects to a connection module of the one or more connection modules.

In step 202, the connection module provides the terminal device a wireless access to the cellular communication network when the connection module is not connected to the base unit.

In step 204, the base unit provides an access for the terminal device to the cellular communication network by communicating wirelessly with the terminal device via the one or more connection modules when the one or more connection modules are connected to the base unit.

Thus, in the proposed solution terminal devices may access the cellular communication network via a base unit and/or a connection module and avoid direct communication link with an access point. This reduces the transmission power required from the terminal device itself. As typical use case of a terminal device accessing a communication network is that the user holds the terminal device either near the user's head or in the hand, reducing the transmission power of the terminal device decreases the radiation experienced by the user's head.

While moving outside residence of the user, he/she may carry, in addition to the terminal device, a communication module in a purse or pocket, for example. The communication module is configured to communicate with the terminal device and provide the terminal device an access to a communication network. The transmission power of the communication module may be larger than the transmission power of the terminal device but as it is located farther away from the user's head the radiation levels provide no danger to the user.

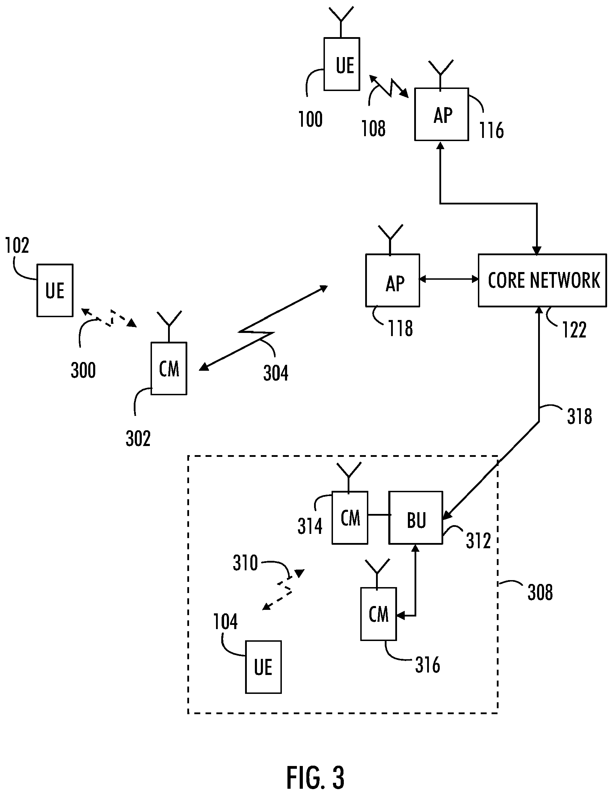

Figure 3 illustrates an embodiment. Figure 3 shows user devices or terminal devices 100, 102, 104. The terminal device 100 is connected to the communication system as in Figure 1 directly via the access point 116. The terminal device 102 has a connection 300 to a communication module 302 which in turn is connected 304 to the communication system via the access point 118. Thus, the communication module 302 acts as a relay between the terminal device 102 and the access point 118, relaying uplink traffic from the terminal device to the access point and vice versa for the downlink traffic. The transmission power required from the terminal device is very small as the communication module is very close. The communication technology used between the terminal device and the communication module may be different than the technology used between the communication module and the cellular network. For example, the terminal device and the communication module may use Bluetooth^{™} low energy communication, and the communication module and the cellular network may use 5G technology in communication.

The terminal device 104 is located in a residential setting 308, for example in the home of the user of the terminal device. The terminal device may access 310 the communication system via the base unit 312 located at the residential setting. There are one or more communication modules 314, 316 connected to the base unit and the terminal device 104 communicated with the base unit 312 via the communication modules. The base unit is connected 318 to the core network 122 of the communication system in a wired or wireless manner, acting thus as a Home (e/g)NodeB (H(e/g)nodeBs) or a home node B gateway.

The communication modules and the base unit may support different wireless communication methods. The modules and base unit may be connected utilizing various RF communication methods or optical methods, such as infrared communication, for example. The communication method utilized from a communication module to the base unit may be different than what is utilized in the opposite direction. For example, a communication module to the base unit may transmit to the base unit utilizing RF and the base unit may transmit to the communication unit utilizing optical communication. The RF connection may utilize Bluetooth^{™}, Bluetooth^{™} low energy, Wireless local area network (WLAN, WiFi), Ultra-wideband UWB, or any other communication standard.

In an embodiment, as the communication modules and the base unit may communicate with each other in a wireless manner, the location of the communication modules may be different than the location if the base unit. For example, the communication modules may be placed in different rooms than the base unit, thus forming a mesh network. Thus, the coverage area provided by the base unit and communication modules is located may be improved.

Thus, the base unit together with the communication modules acts as a relay between the terminal device 104 and the core network 122, relaying uplink traffic from the terminal device to the core network and vice versa for the downlink traffic. The transmission power required from the terminal device is very small as the communication modules are very close.

When the user is at a residential setting, the terminal device communicates with the base unit to which one or more communication modules are installed. Thus, the communication modules may be utilized both at the move and at home.

In an embodiment, the base unit is configured to utilize the radio frequency, RF, parts of the communication modules when communicating with the terminal device. The base unit does not necessarily need RF parts of its own. In an embodiment, the base unit may comprise additional RF parts to increase the coverage and/or capacity of the residential cell provided by the base unit. The RF parts may further comprise an RF combiner, which can combine more than one TX signal to an antenna, a multicoupler enabling multiple RF receivers to use the same antenna, a duplexer, for example.

The communication modules 314, 316 connected to the base unit 312 are removable from the base unit and when the user of the terminal device 104 leaves the residential setting 308, he/she may take one of the communication modules with him/her and thus the communication unit may provide the terminal device 104 access to the communication network.

Typically (but not necessarily), communication modules alone are one user devices. Base units in turn may be configured to serve several users at the same time.

In an embodiment, the communication module may be attached to a vehicle such as a car. The connection module may serve a user or users in the vehicle or beside the vehicle and provide access to the communication network. Also if the vehicle is equipped with a transceiver, it may access the communication network via the communication module.

In an embodiment, a communication module or a base unit may be installed in a conference room, thereby serving the users and equipment in the room by providing access to the communication network.

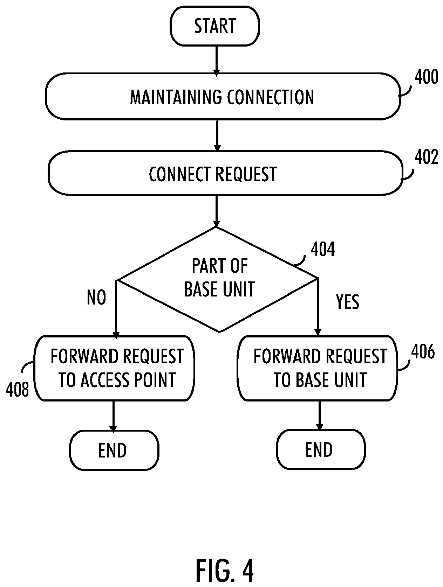

Figure 4 illustrates a flow chart according to an embodiment. The flowchart illustrates an example of the operation of a connection module.

In step 400, the connection module is configured to maintain a connection to a terminal device.

In step 402, the connection module receives a request from the terminal device to access the communication network. For example, the sue wishes to make a call or access the internet using the terminal device.

In step 404, it is determined whether the connection module is connected to a base unit (it is located in a residential setting) or directly to an access point (the user of the terminal device is on the move).

If the connection module is connected to a base unit, the connection module forwards the request to the base unit in step 406.

If the connection module is not connected to a base unit but instead directly to an access point, the connection module forwards in step 408 the request to the access point the communication module is connected to.

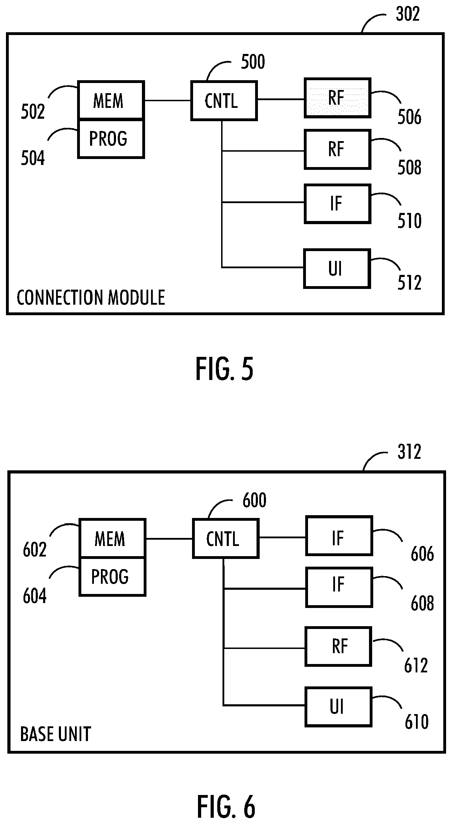

Figures 5 and 6 illustrate examples of the apparatuses of an arrangement according to an embodiment. Figure 5 illustrates an example of a connection module 302 and Figure 6 illustrates an example of a base unit 312.

Referring to Figure 5, the connection module 302 comprises a control circuitry (CNTL) 500, such as at least one processor, and at least one memory 502 including a computer program code (software) 504, wherein the at least one memory and the computer program code (software) 504, are configured, with the at least one processor, to cause the connection module to carry out any one of the embodiments described above.

The memory 502 may be implemented using any suitable data storage technology, such as semiconductor-based memory devices, flash memory, magnetic memory devices and systems, optical memory devices and systems, fixed memory, and removable memory.

The connection module may further comprise a first interface 506 to operatively connect the connection module to an access point of the cellular communication network. The first interface 506 may comprise a radio frequency, RF, transceiver or interface comprising hardware and/or software for realizing communication connectivity according to one or more communication protocols. The first interface may provide the apparatus with communication capabilities to access a cellular communication system, for example. The first interface may comprise standard well-known components such as an amplifier, filter, frequency-converter, (de)modulator, and encoder/decoder circuitries and one or more antennas.

The connection module may further comprise one or more second interfaces 508 to connect the connection module to terminal devices or other accessories, such as a smart watch or virtual reality glasses, for example.

As with the first interface, the second interface 508 may comprise a radio frequency, RF, transceiver or interface comprising hardware and/or software for realizing communication connectivity according to one or more communication protocols. In an embodiment, the second interface may comprise a Bluetooth^{™} transceiver. The second interface may comprise standard well-known components such as an amplifier, filter, frequency-converter, (de)modulator, and encoder/decoder circuitries and one or more antennas. In an embodiment, the first and second interface may utilize the same components or be combined into a single interface.

The connection module may further comprise a third interface 510 to connect the connection module to the base unit. In an embodiment, the interface may provide a wired or wireless connection between the connection module and the base unit. In an embodiment, a wired connection between the connection module and the base unit enables the base unit to change the connection module connected to it.

The connection module may further comprise user interface 512 comprising, for example, at least one keypad, a microphone, a touch display, a display, a speaker, etc. The user interface 512 may be used to control the operation of the connection module.

Referring to Figure 6, the base unit 312 comprises a control circuitry (CNTL) 600, such as at least one processor, and at least one memory 602 including a computer program code (software) 604, wherein the at least one memory and the computer program code (software) 604, are configured, with the at least one processor, to cause the connection module to carry out any one of the embodiments described above.

The memory 602 may be implemented using any suitable data storage technology, such as semiconductor-based memory devices, flash memory, magnetic memory devices and systems, optical memory devices and systems, fixed memory, and removable memory.

The base unit 312 further comprises a first interface 606 to operatively connect the base unit to core network of the cellular communication network. In an embodiment, the interface may provide a wired or wireless connection between the base unit and the core network. The interface provides the base unit with access to the communication network. In an embodiment, the base unit, connected to one or more communication modules, may act as a home base station or Home (e/g)NodeB (H(e/g)nodeBs) or a home node B gateway. The interface enables traffic and signaling between the base unit and the communication network. If the first interface provides a wireless connection, it may comprise an RF, transceiver or interface comprising hardware and/or software for realizing communication connectivity according to one or more communication protocols.

The base unit 312 further comprises a second interface 608 to operatively connect the base unit to the one or more connection modules. In an embodiment, the interface may provide a wired or wireless connection between the base unit and the core network. In an embodiment, a wired connection between the connection module and the base unit enables the base unit to change the connection module connected to it. In an embodiment, there may be more than one first and second interfaces.

The base unit is configured to utilize the RF components of the one or more connection modules when creating a cell for serving terminal devices. The terminal devices having a need to access the communication network can connect to the base unit via the one or more connection modules connected to the base unit.

In an embodiment, the base unit comprises a chassis where the chassis comprises slots to which one or more connection modules may be placed. In an embodiment, the slots position the one or more connection modules in such a manner that the radiation patterns of the antennas of the connection modules are pointing in different direction. This enhances the coverage area or service area of the base unit. Further, the base unit may be configured to form a sectorized cell when one or more connection modules are connected to the base unit, the number of sectors being equal or less than the number of connected connection modules. Further, the base unit may be configured to utilize antennas of the one or more communication units as Multiple Input Multiple Output antennas in communication with the terminal device when one or more connection modules are connected to the base unit.

In an embodiment, both the base unit and the connection modules may provide an omnidirectional radiation pattern. In an embodiment, the chassis for the one or more connection modules may comprise directional antennas for the connection modules placed in the chassis so that the base unit and connected connection modules may form an omnidirectional cell and as many directional cells as there are connected connection modules.

The base unit may further comprise user interface 610 comprising, for example, at least one keypad, a microphone, a touch display, a display, a speaker, etc. The user interface 610 may be used to control the operation of the base unit.

In an embodiment, the base unit may further comprise an interface 612 to enhance the coverage area provided by the base unit with the one or more connection modules. The interface may comprise RF transceiver and/or standard well-known components such as an amplifier, filter, frequency-converter, (de)modulator, and encoder/decoder circuitries and one or more antennas.

In an embodiment, at least some of the functionalities of the above modules and units 302, 312 may be shared between more than one physically separate devices, forming one operational entity. Therefore, the modules and units 302, 312 may be seen to depict the operational entity comprising one or more physically separate devices for executing at least some of the described processes.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described above may be carried out by a module and/or unit comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments described above.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments described above.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out at least in part in the form of a computer process defined by a computer program or portions thereof. Embodiments of the methods described above may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An arrangement for providing access to a cellular communication network, comprising:
a base unit (312) configured be in connection with the cellular communication network;
one or more connection modules (302, 314), the one or more connection modules being connectable to the base unit;
the connection module (302, 314) configured to communicate wirelessly with a terminal device (102, 104), form a wireless connection with the cellular communication network and provide the terminal device (102) access to the cellular communication network while being separate from the base unit (312);
the base unit (312) configured to communicate wirelessly with the terminal device (104) via the one or more connection modules (302, 314) when the one or more connection modules (302, 314) are connected to the base unit (312) and provide the terminal device (104) access to the cellular communication network.

2. The arrangement of claim 1, wherein the base unit is configured to charge the one or more connection modules connected to it.

3. The arrangement of claim 1 or 2, wherein the base unit is connectable to more than one connection module simultaneously.

4. The arrangement of any preceding claim, wherein the base unit is configured to form a sectorized cell when one or more connection modules are connected to the base unit, the number of sectors being equal or less than the number of connected connection modules.

5. The arrangement of any preceding claim 1 to 3, wherein the base unit is configured to utilize antennas of the one or more communication units as Multiple Input Multiple Output antennas in communication with the terminal device when one or more connection modules are connected to the base unit.

6. The arrangement of any preceding claim, the base unit comprising one or more radio frequency or optical units additional to the connected one or more connection modules and being configured to utilize the radio frequency or optical units when communicating with the terminal device.

7. The arrangement of any preceding claim, the base unit being connected to the cellular communication network via a wired or wireless connection.

8. The arrangement of any preceding claim, the base unit comprising an interface to connect the terminal device to Internet via a wired or wireless connection.

9. The arrangement of any preceding claim, wherein the base unit comprises a first interface to operatively connect the base unit to core network of the cellular communication network, a second interface to connect the base unit to the one or more connection modules and a processor and a memory including instructions, the instructions, when executed by the processor, control the operation of the base unit.

10. The arrangement of any preceding claim, wherein the connection module comprises a first interface to operatively connect the connection module to an access point of the cellular communication network, a second interface to connect the connection module to a terminal device, a third interface to connect the connection module to the base unit and a processor and a memory including instructions, the instructions, when executed by the processor, control the operation of the connection module.

11. A method of providing access to a cellular communication network by an arrangement comprising a base unit (312) configured be in connection with the cellular communication network and one or more connection modules (302, 314), the one or more connection modules being connectable to the base unit; the method comprising
a terminal device (102, 104) connecting (200) to a connection module of the one or more connection modules;
providing (202) the terminal device (102) by the connection module (314) of the one or more connection modules an access to the cellular communication network when the connection module (314) is not connected to the base unit (312);
providing (204) the terminal device (104) by the base unit (312) an access to the cellular communication network by communicating wirelessly with the terminal device (104) via the one or more connection modules (314) when the one or more connection modules are connected to the base unit.

12. The method of claim 11, further comprising: charging by the base unit the one or more connection modules connected to it.

13. The method of claim 11, wherein the base unit is connectable to more than one connection module simultaneously.

14. The method of claim 11, further comprising: forming a sectorized cell by the base unit when one or more connection modules are connected to the base unit, the number of sectors being equal or less than the number of connected connection modules.

15. A computer readable medium comprising program instructions stored thereon for causing an apparatus to perform the methods of claims 11 to 14.
